# EUROPEAN PATENT APPLICATION

(11) **EP 1 534 029 A2**
(43) Date of publication of application: **25.05.2005**
(21) Application number: 04025450.0
(22) Date of filing: 26.10.2004
(51) Int. Cl.: H04Q 7/32, G06F 9/445

(54) **Mobile communication terminal with menu display change function**

(30) Priority: 28.10.2003 KR 2003075627
(71) Applicant: Curitel Communications, Inc., Seoul (KR)
(72) Inventor: Wang, Sung-Sik, Dongan-Gu, Anyang-Si, Kyoungki-Do (KR)
(74) Representative: Grünecker, Kinkeldey, Stockmair & Schwanhäusser Anwaltssozietät

(57) **Abstract**

Disclosed is a mobile communication terminal in which a program code area and an image code area are separated from each other in a code ROM area of a flash ROM, wherein various program routines controlling the mobile communication terminal are stored in the program code area, and images or audio files accessed by the program routines are stored in the image code area. Files including menu images are stored in the image code area after being downloaded.

In accordance with the present invention, since the program code area is separated from the image code area, it is possible to upgrade only a program code and thus to shorten the time required for a firmware upgrade. In addition, it is possible to change the menu images without the need to upgrade a firmware version.

## Description

### BACKGROUND OF THE INVENTION

This application claims the priority of Korean Patent Application No. 2003-75627, filed on October 28, 2003, in the Korean Intellectual Property Office, the disclosure of which is incorporated herein in its entirety by reference.

### 1. Field of the Invention

The present invention relates to a mobile communication terminal and, more particularly, to a user interface technology in a mobile communication terminal.

### 2. Description of Related Art

In a conventional mobile communication terminal, it is not possible for a user to set up or change images at his or her convenience except several images such as an initial screen image upon power-on, or an image displayed when the mobile communication terminal rings. A conventional image change procedure is now set forth.

A flash ROM (read-only memory) of a mobile communication terminal is logically divided into a code ROM area and an EFS (embedded file system) area. Default images such as an initial screen image, which are set by a manufacturer, are stored in the code ROM area. To change the initial screen image or a standby screen image, a user typically downloads a new image from a server via WAP (wireless application protocol) to store the image in the EFS area. Once the mobile communication terminal is turned on and a corresponding routine is executed, the routine first reads a setting condition to determine whether to use a default image or a downloaded image. If the condition is set to display the downloaded image, an image file stored in the EFS area is loaded into a RAM area assigned to the image file and the newly downloaded image is displayed under the control of the routine.

On the other hand, a technique of changing a menu icon is disclosed in Korean Patent Publication No. 2001-111166 published on December 17, 2001, in which new menu icons are downloaded to replace existing icons, and a menu itself is also edited.

According to this prior art, since codes for the menu icons are not separated from program codes in the code ROM area, it is not possible to change the menu icons without upgrading the code ROM. The upgrade of the code ROM implies an upgrade of a mobile communication terminal. Moreover, a version of the code ROM is thoroughly managed for the quality management of the mobile communication terminal. Accordingly, it is actually not possible to change the menu icons as simply as an initial screen image.

On the other hand, if a setting condition is checked to load an image file each time a menu image is displayed, menu conversion will become slow, causing dissatisfaction among users. Accordingly, the conventional techniques of changing the initial screen image cannot be suitably employed for changing the menu image.

### SUMMARY OF THE INVENTION

The present invention provides a mobile communication terminal having functions of easily changing menu images.

The present invention also provides a mobile communication terminal having functions of changing menu images without the need to upgrade a version of the mobile communication terminal.

In accordance with an aspect of the present invention, there is provided a mobile communication terminal comprising a flash ROM having a program code area and an image code area separated from each other.

The mobile communication terminal may comprise: a communication unit; the flash ROM having a program code area and an image code area separated from each other; a control unit including a communication control unit for controlling data communication via the communication unit, a menu image change unit for writing a menu image downloaded via the communication unit onto the image code area, and a menu processing unit which is controlled by a routine stored in the program code area of the flash ROM and loads the menu image in the image code area to display the menu image on a display; a display driving unit for generating display data and driving the display under the control of the menu processing unit; and a display unit which is driven by the display driving unit.

The mobile communication terminal may further comprise an external interface unit which transmits/receives data to/from an external device, wherein the control unit further comprises a firmware upgrade unit which writes a firmware received through the external interface unit onto the program code area of the flash ROM.

The program code area and the image code area may be separated from each other within a code ROM area of the flash ROM.

In accordance with another aspect of the present invention, there is provided a method of changing a menu image in a mobile communication terminal, the method comprising the steps of: a) accessing a server over a wireless Internet; b) receiving menu images from the server and storing the menu images into a temporary area; c) replacing existing menu images in an image code area located in a code ROM area of a flash ROM with the menu images stored in the temporary area; and d) retrieving and displaying the replaced menu images under the control of a routine stored in a program code area located in the code ROM area of the flash ROM.

The step b) may comprise the steps of: b1) receiving and displaying a menu image list from the server; b2) performing simulations of menu images selected from the menu image list; and b3) storing menu images finally selected by a user into a temporary area.

In accordance with another aspect of the present invention, there is provided a method of changing a menu image in a mobile communication terminal, the method comprising the steps of: I) establishing a connection with an external device via an external interface unit; m) receiving menu images from the external device and replacing existing menu images in an image code area located in a code ROM area of a flash ROM with the received menu images; and n) retrieving and displaying the replaced menu images under the control of a routine stored in a program code area located in the code ROM area of the flash ROM.

The step m) may comprise the steps of: m1) displaying a menu image list by means of a display unit of the external device; m2) performing simulations of menu images selected by a user by means of the external device; and m3) receiving menu images from the external device according to the user's final selection and replacing the existing menu images in the image code area located in the code ROM area of the flash ROM with the received menu images.

Examples of the menu images, which constitute a menu display, include menu icons, animation image, etc.

### BRIEF DESCRIPTION OF THE DRAWINGS

The above and other features and advantages of the present invention will become more apparent by describing in detail exemplary embodiments thereof with reference to the attached drawings in which:
FIG. 1 is a block diagram showing the configuration of a mobile communication terminal in accordance with an embodiment of the present invention;
FIG. 2 is a flowchart showing a method of changing a menu image in accordance with an embodiment of the present invention; and
FIG. 3 is a flowchart showing a method of changing a menu image in accordance with another embodiment of the present invention.

### DETAILED DESCRIPTION OF THE INVENTION

Exemplary embodiments in accordance with the present invention will now be described in detail with reference to the accompanying drawings.

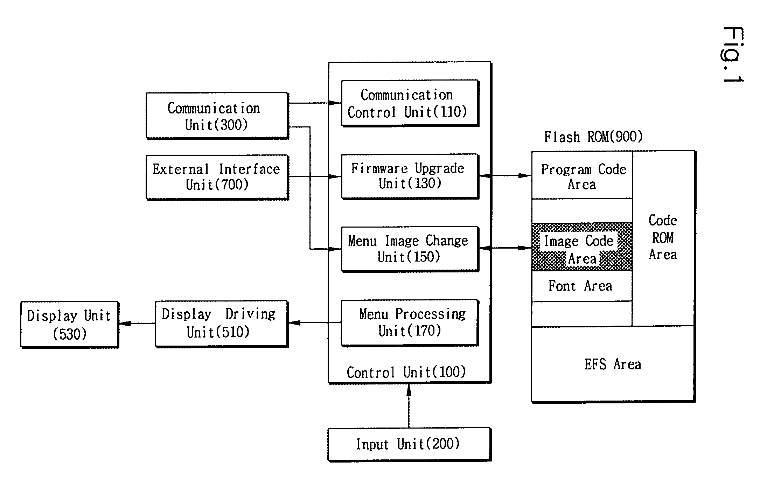

FIG. 1 is a block diagram showing the configuration of a mobile communication terminal in accordance with an embodiment of the present invention. The mobile communication terminal comprises a communication unit 300 for communicating with a base transceiver station, a flash ROM 900 for storing programs and data, a display driving unit 510 for driving a display using display data, a display unit 530 driven by the display driving unit 510, an input unit 200 for inputting command signals, an external interface unit 700 for transmitting/receiving data to/from an external device, and a control unit 100 for controlling the entire system.

The communication unit 300 is a circuit for conducting data and voice communications using, for example, a CDMA or GSM scheme. The external interface unit 700 is configured to interface with external devices through a serial interface, such as RS-232, USB, or an IR port. An example of the display unit 530 includes an LCD. The display driving unit 510 generates a frame driving signal from display data inputted to a driving unit for driving the display unit 530. The input unit 200 is a device configured for a user to be able to input command signals. Examples of the input unit 200 include a keypad, a trackball, and a touchpad. The control unit 100 is typically in the form of a single chip combined with a portion of the communication unit 300 and is formed by a main microprocessor operated with a program code. The flash ROM 900 is a non-volatile memory. Since a flash memory is mainly used as a medium for storing programs and data, the storage medium mentioned in the present invention is referred to as the flash ROM. However, the present invention is not limited to the flash ROM as a storage medium.

The flash ROM 900 is typically divided into a code ROM area and an EFS area. The code ROM area stores a device control code and an initialization code in addition to data. The EFS area is one for a file system that manages data files stored in the flash memory and may store temporary data or files.

In accordance with the present invention, the code ROM area of the flash ROM 900 is divided into a program code area and an image code area. The program code area is, for example, one for storing program codes for controlling a menu display in a menu display routine. In general, the program code area stores program codes written by a programmer rather than media files created through a graphic operation or a sound source editing operation. The image code area is one for storing media files to be retrieved upon executing the program codes stored in the program code area.

In general, in developing a mobile communication terminal, the developments in software and multimedia functions for a user environment are also typically accompanied. It is conventionally not possible to individually manage a program code version and an image code version after the development, since the program code and image code are not separated from each other. Consequently, it is not possible to separately upgrade only a default image code such as a menu image code.

A read-only image file is created from image codes. When routines of the program code area are compiled and object files are linked, the image file is set in advance to locate at an absolute address different from that of the program code area in an environment setup file such as scatter loading file (.SCL). Accordingly, a programmer can easily detect the locations of each of the menu images, and it is thus possible to change the menu images individually or simultaneously.

In accordance with a preferred embodiment, the image code area is separated from the program code area by a sufficient distance in a code ROM area of a flash ROM.

The control unit 100 comprises a typical communication control unit 110 for controlling data communication via the communication unit 300. In addition, the control unit 100 comprises a menu image change unit 150 and a menu processing unit 170.

The menu image change unit 150 changes existing menu images by writing menu images downloaded through the communication unit 300 onto the image code area. The changing process will be described in detail later. The menu processing unit 170 provided in the control unit 100 accesses the changed menu images. The menu processing unit 170 retrieves desired menu images from the image code area and operates so that the menu images are displayed on a display.

In accordance with the present invention, the control unit 100 further comprises a firmware upgrade unit 130. The firmware upgrade unit 130 upgrades a firmware by writing the firmware received through the external interface unit 700 onto the program code area of the flash ROM 900. In accordance with the present invention, since only a program code area is upgraded without upgrading high-capacity image files, it is possible to significantly reduce the time required for a firmware upgrade as compared to the prior art.

Moreover, after the menu processing unit 170 is programmed by a manufacturer and a mobile communication terminal is sold, a user can separately change the menu images. In addition, it is also possible for a user to use the existing menu images even though program codes for controlling the control unit 100 have been changed by the firmware upgrade.

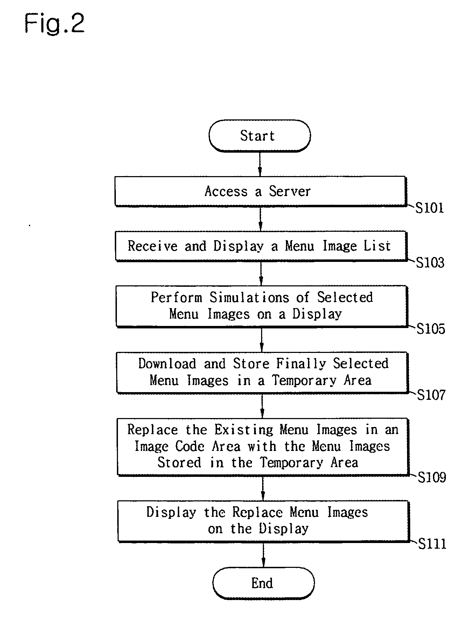

FIG. 2 is a flowchart showing a method of changing a menu image in accordance with an embodiment of the present invention. A method of changing a menu image in accordance with the present invention will now be described in detail with reference to FIG. 2.

A mobile communication terminal accesses a server over a wireless Internet network under the control of the communication control unit 110 provided in the control unit 100 (step S101). When the mobile communication terminal establishes a connection to the server, the server provides an image change service in accordance with the present invention through a series of menu selection operations. The server provides a plurality of sets of menu images that have the same image size and are arranged in the same order as menu images provided by manufacturers. The server provides a list of the sets of menu images, and the mobile communication terminal receives the list from the server and displays the list on a display (step S103). When a user selects a set of menu images from the list above, the mobile communication terminal downloads the selected set of menu images and performs simulations of the menu images on a display (step S105). The simulations may assist the user in selecting menu images. A graphic process for the simulations is typical in a current mobile development platform based on a virtual device, and thus the detailed description of the process is omitted in the present embodiment.

Once the user makes a final selection of a set of menu images, the set of menu images are downloaded and stored for simulation, for example, in a temporary area that is a portion of the EFS area in the flash ROM in order to prevent the mobile communication terminal system from malfunctioning in case of being disconnected during the downloading process (step S107).

After a file including the menu images is completely downloaded to the temporary area, the mobile communication terminal disconnects from the wireless Internet. In an offline mode, the mobile communication terminal converts to an upgrade mode, and a routine of controlling an upgrade process is executed. The menu images included in the downloaded binary file replace existing menu images in an image code area located in the code ROM area of the flash ROM (step S109). The procedure described above is carried out by the menu image change unit 150 provided in the control unit 100. Subsequently, the mobile communication terminal is reset.

Next, the menu processing unit 170 accesses the same image code area as before, reads and displays the replaced menu images (step S111).

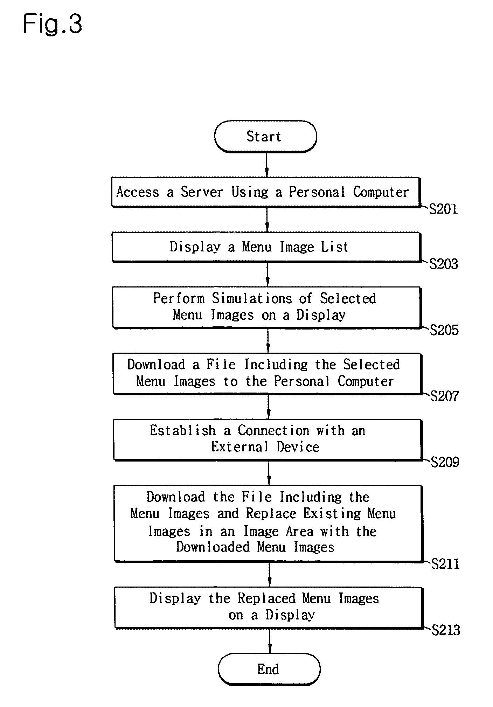

FIG. 3 is a flowchart showing a method of changing a menu image in accordance with another embodiment of the present invention. A user accesses a server, which provides menu images, via a web browser in a personal computer (step S201). The user reads a menu image list provided by the server (step S203). The user selects a set of menu images from the list. The server controlling the web site performs simulations of the selected set of menu images on a display of a mobile communication terminal displayed on a computer screen (step S205). A graphic process for the simulations is typical in a computer field, and thus the detailed description is omitted in the present embodiment. Once a user makes a final selection of a desired set of menu images after viewing simulations of several menu images on a display, the server downloads a file including the selected set of menu images to the user's personal computer (step S207).

Next, the user executes a program controlling a menu image upgrade in the personal computer. Then, a firmware upgrade of the mobile communication terminal is conducted under the control of this program. The personal computer establishes a connection with the mobile communication terminal through its own interface under the control of this program (step S209). After the connection is established, the mobile communication terminal downloads a file including the menu images from the computer and replaces existing menu images in an image area located in the code ROM area of the flash ROM with the downloaded menu images (step S211). Subsequently, the computer disconnects from the mobile communication terminal. After the mobile communication terminal is reset, a typical control operation for displaying the menu images is performed, where the menu processing unit 170 accesses and controls menu images stored in the image code area so that the display driving unit 510 displays the menu images on a display (step S213).

In accordance with the present invention, since the program code area is separated from the image code area, it is possible to upgrade only a program code and thus to shorten the time required for a firmware upgrade. In addition, it is possible to change default images such as menu images without the need to upgrade a firmware version.

Further, it is also possible to simultaneously change the images used in a mobile communication terminal, such as an initial screen image and a menu image.

While the present invention has been described with reference to exemplary embodiments thereof, it will be understood by those skilled in the art that various changes in form and details may be made therein without departing from the scope of the present invention as defined by the following claims.

## Claims

1. A mobile communication terminal comprising a flash ROM (read-only memory) having a program code area and an image code area separated from each other.

2. The mobile communication terminal of claim 1, comprising:
a communication unit;
the flash ROM;
a control unit including a communication control unit for controlling data communication via the communication unit, a menu image change unit for writing a menu image downloaded via the communication unit onto the image code area, and a menu processing unit which is controlled by a routine stored in the program code area of the flash ROM and loads the menu image in the image code area to display the menu image on a display;
a display driving unit for generating display data and driving the display under the control of the menu processing unit; and
a display unit which is driven by the display driving unit.

3. The mobile communication terminal of claim 2, further comprising an external interface unit which transmits/receives data to/from an external device, wherein the control unit further comprises a firmware upgrade unit which writes a firmware received through the external interface unit onto the program code area of the flash ROM.

4. The mobile communication terminal of any one of claims 1 to 3, wherein the program code area and the image code area are separated from each other within a code ROM area of the flash ROM.

5. A method of changing a menu image in a mobile communication terminal, the method comprising the steps of:
a) accessing a server over a wireless Internet;
b) receiving menu images from the server and storing the menu images into a temporary area;
c) replacing existing menu images in an image code area located in a code ROM area of a flash ROM with the menu images stored in the temporary area; and
d) retrieving and displaying the replaced menu images under the control of a routine stored in a program code area located in the code ROM area of the flash ROM.

6. The method of claim 5, wherein step b) comprises the steps of:
b1) receiving and displaying a menu image list from the server;
b2) performing simulations of menu images selected from the menu image list; and
b3) storing menu images finally selected by a user into a temporary area.

7. A method of changing a menu image in a mobile communication terminal, the method comprising the steps of:
I) establishing a connection with an external device via an external interface unit;
m) receiving menu images from the external device and replacing existing menu images in an image code area located in a code ROM area of a flash ROM with the received menu images; and
n) retrieving and displaying the replaced menu images under the control of a routine stored in a program code area located in the code ROM area of the flash ROM.

8. The method of claim 7, wherein step m) comprises the steps of:
m1) displaying a menu image list by means of a display unit of the external device;
m2) performing simulations of menu images selected by a user by means of the external device; and
m3) receiving menu images from the external device according to the user's final selection and replacing the existing menu images in the image code area located in the code ROM area of the flash ROM with the received menu images.
